# EUROPÄISCHE PATENTSCHRIFT

(11) **EP 0 754 651 B1**
(45) Veröffentlichungstag und Bekanntmachung des Hinweises auf die Patenterteilung: **16.12.1998**
(21) Anmeldenummer: 96110997.2
(22) Anmeldetag: 09.07.1996
(51) Int. Cl.: C01D 9/20, C01B 21/48, C01B 21/50

(54) **Oberflächenbehandlung von kristallinen Natriumnitrit bzw. Natriumnitrat**
Surface treatment of crystalline sodium nitrite or sodium nitrate
Traitement de surface de nitrite de sodium cristallin ou de nitrate de sodium

(30) Priorität: 18.07.1995 DE 19526080
(43) Veröffentlichungstag der Anmeldung: 22.01.1997
(73) Patentinhaber: BASF Aktiengesellschaft, 67063 Ludwigshafen (DE)
(72) Erfinder: Eisen, Hans Jürgen, 67071 Ludwigshafen (DE)

(56) Entgegenhaltungen:
- EP-A- 0 004 883
- DE-A- 1 642 998
- DE-A- 1 792 486
- GB-A- 1 248 861
- US-A- 3 325 276
- US-A- 5 102 682
- DATABASE WPI Section Ch, Week 8403 Derwent Publications Ltd., London, GB; Class C04, AN 84-016367 XP002016258 & SU-A-1 004 325 (UKR AGRIC ACAD) , 15.März 1983

## Beschreibung

Die vorliegende Erfindung betrifft ein verbessertes Verfahren zur Herstellung von rieselfähigem Natriumnitrit und / oder Natriumnitrat.

Die Herstellung von Natriumnitrit bzw. Natriumnitrat ist bereits seit längerem bekannt und in der Literatur daher umfangreich beschrieben. Üblicherweise erfolgt die Herstellung - wie beispielsweise in D1 (DE-A 3125616) beschrieben - durch Umsetzung nitroser Gase mit Natronlauge bei einer Temperatur von etwa 20 bis 80 °C (D1, Seite 2 bzw. Seite 4). Das so erhaltene Produkt wird durch Eindampfen der Mutterlauge ausgefällt und nachfolgend - beispielsweise in einem Drehrohrofen - getrocknet und anschließend abgekühlt (D1, Beispiel).

Natriumnitrit bzw. Natriumnitrat werden vielfältig eingesetzt. Typische Einsatzgebiete finden sich beispielsweise bei Düngemitteln, der Glasherstellung sowie Oberflächen- bzw. Wärmebehandlung von Metallen und auch insbesondere in der Lebensmittelindustrie, so etwa als Additiv bei der Herstellung von Pökelsalz.

Aufgrund ihrer relativ hohen Hygroskopizität weisen allerdings beide Salze - insbesondere das Natriumnitrit - eine ausgeprägte Neigung zum Verbacken auf. Dies hat zur Folge, daß bereits bei Lagerung relativ kleiner Mengen dieser Salze rasch große und harte Agglomerate entstehen, welche vor einer Weiterverarbeitung erst mit großem Aufwand aufbereitet werden müssen, um sie in eine förder- und dosierbare Form zu bringen.

Beispielhaft ist eine bisher übliche Aufbereitungsstufe von verbackenen Natriumnitrit und / oder Natriumnitrat. Die Salzagglomerate werden einem Walzenbrecher zugeführt. In diesem Apparat werden die Agglomerate mit hohem Energieaufwand zerkleinert. Die zerkleinerten Produkte werden aus dem Walzenbrecher ausgetragen und über ein Band dem Sieb zugeführt.

In diesem Sieb erfolgt eine Trennung in einen Grobgutanteil bzw. Feingutanteil. Der Grobgutanteil wird über die Bänder/Elevatoren erneut dem Walzenbrecher zur weiteren Zerkleinerung zugeführt. Der Feingutanteil wird in eine Feingutvorlage geführt.

Wegen der eingangs beschriebenen Hygroskopizität und der damit verbundenen Neigung zur Ausbildung großer und harter Agglomerate konnte weiterhin eine lose Lagerung größerer Mengen an Natriumnitrit und / oder Natriumnitrat beispielsweise in einem Silo oder in einem größeren Gebinde (wie z.B. in sogenannten "Big bag") nicht wirtschaftlich praktiziert werden, da eine Entnahme aus diesen Behältern bereits kurze Zeit später bestenfalls noch mit großem Aufwand möglich war.

Die Verwendung von Kieselsäuren zur Verbesserung der Rieselfähigkeit bei zur Agglomeration neigenden Produkten ist zwar allgemein bekannt und beispielsweise in dem Dokument D2 (Druckschrift der Degussa AG, Dr. Horst Ferch, Rolf Oelmüller, "Synthetische Kieselsäuren als Fließhilfsmittel und als Trägersübstanz") beschrieben, allerdings versprach sich die Fachwelt von einer Verwendung dieser Hilfsmittel bei Natriumnitrit und / oder Natriumnitrat keinerlei Vorteile. Dies wird nicht nur durch die eingangs beschriebene, bisher übliche Vorgehensweise bei der Aufarbeitung entsprechender Agglormerate belegt, sondern auch in D2 finden sich trotz ausführlicher Auflistung geeigneter Stoffe keine Hinweise auf Eignung bei Natriumnitrit und / oder Natriumnitrat.

Neben den umfangreichen Beispielen wird lediglich die Zugabe von Kieselsäuren bei anorganischen Salzen und Industriesalzen allgemein erwähnt, wobei jedoch auch festgestellt wird, daß bei spezifisch schweren und feinteiligen Stoffen sowie stark hygroskopischen Produkten eine gute Rieselfähigkeit Schwierigkeiten bereitet (s. Seite 33).

Bei der Oberflächen- und Wärmebehandlung von Metallen werden üblicherweise die zu vergüteten Metallteile in Schmelzen getaucht, welche neben gängigen Zuschlägen im wesentlichen geschmolzenes Natriumnitrit enthalten. Hier versuchte man für die Herstellung der Schmelze Natriumnitrit einzusetzen, dessen Rieselfähigkeit durch die Zugabe von Natriumsalzen der Phenylethylnaphthalinsulfonsäure verbessert wurde. Allerdings wurde hierbei durch Flotation eine Anreicherung dieses organischen Zuschlagstoffes an der Oberfläche der Schmelze beobachtet und bei den hier vorliegenden Temperaturen von etwa 300 bis 400°C konnte vereinzelt eine heftige exotherme Reaktion dieses Zuschlagstoffes mit Sauerstoff beobachtet werden. Daher wird in diesen Anwendungsfällen meist unbehandeltes Natriumnitrit verwendet, welches allerdings zuvor mit dem eingangs beschriebenen Aufwand aufzubereiten ist.

Da sowohl Natriumnitrit als auch Natriumnitrat als Zwischenprodukte für die Herstellung von Stoffen dienen können, bei welchen hohe Anforderungen an die Produktreinheit sowie die Arbeitssicherheit gestellt werden, finden auch andere bekannte Beschichtungs- bzw. Hilfsmittel wie beispielsweise Amine hier keine Anwendung.

Es stellte sich somit die Aufgabe, ein verbessertes Verfahren zu finden, welches in verfahrenstechnisch einfacher und wirtschaftlicher Art und Weise die Herstellung von gut rieselfähigem Natriumnitrit und / oder Natriumnitrat ermöglicht. Hierbei sollte das Verfahren weiterhin die Möglichkeit eröffnen, Produkte mit beständig hoher Rieselfähigkeit in einer solchen Reinheit herzustellen, daß sie auch hohen Anforderungen, wie sie beispielsweise in der Lebensmittelindustrie anzutreffen sind, genügen können.

Demgemäß wurde ein Verfahren zur Herstellung von rieselfähigem Natriumnitrit und / oder Natriumnitrat gefunden welches dadurch gekennzeichnet ist, daß man das Natriumnitrit und / oder Natriumnitrat nach Trocknung und Kühlung mit Kieselsäure und / oder Trikalziumphosphat beschichtet.

Weiterhin betrifft die Erfindung die Verwendung der erfindungsgemäß erhältlichen Salze für die Herstellung von Pökelsalz sowie die Verwendung von Kieselsäure und / oder Trikalziumphosphat zur Beschichtung von für die Herstellung von Pökelsalz geeignetem Natriumnitrit und / oder Natriumnitrat.

Im folgenden wird das neue Verfahren schematisch näher beschrieben.

Das feuchte Natriumnitrit und/oder Natriumnitrat wird in eine Trocknungsstufe geleitet. Als Trocknungsapparate eignen sich beispielsweise Drehrohrofen oder Wirbelschicht-Trockner.

Die Trocknung erfolgt üblicherweise bei Temperaturen von etwa 100 bis 300°C, die Verweilzeit beträgt etwa 0,25 bis 0,50 Stunden. In der Regel wird das Salz auf eine Restfeuchte von weniger als 0,2, bevorzugt 0,05 Gew.-% Wasser getrocknet.

Anschließend wird das getrocknete Salz einer Kühlstufe zugeführt. Hier wird das Produkt auf eine Temperatur kleiner etwa 40°C, bevorzugt kleiner etwa 30°C abgekühlt. Zur Kühlung können beispielsweise Drehtrommeln oder Wirbelschicht-Kühler eingesetzt werden.

Das gekühlte Kristallisat wird über das Förderorgan einem Mischer zugeleitet. Weiterhin wird dem Mischer aus dem Vorratsbehälter über die Dosiervorrichtung und Leitung die Beschichtungssubstanz zugeführt. Die beiden Komponenten werden im Mischer so intensiv miteinander in Kontakt gebracht, daß die Oberfläche der Salzkristalle mit einer homogenen Schicht der Beschichtungssubstanz versehen wird. Dieser Mischvorgang kann sowohl kontinuierlich als auch diskontinuierlich betrieben werden. Als Mischapparate können beispielsweise einfache Betonmischer (diskontinuierlich) oder bevorzugt kontinuierliche Durchlaufmischer mit innenliegenden Paddeln, wie sie beispielsweise von der Firma Drais unter dem Typ Tornado vertrieben werden, eingesetzt werden. Die Massenanteile von zudosiertem Salz und Beschichtungssubstanz betragen 0,1 bis 1,0 Gew.-%, bevorzugt 0,2 bis 0,4 Gew.-%, besonders bevorzugt 0,2 bis 0,3 Gew.-%, bezogen auf die Mischung. Die Verweilzeit im Mischer beträgt etwa 1 bis 10 min, bevorzugt 1 bis 2 min, die Temperatur beim Mischvorgang liegt bei etwa 20 bis 40 °C. Der Mischvorgang wird bei relativ geringer Scherbeanspruchung durchgeführt, wesentliches Ziel bei diesem Verfahrensschritt besteht darin, die Oberläche des Salzes intensiv mit der Beschichtungssubstanz zu benetzen.

Die Schichtdicke der Beschichtungssubstanz auf den Salzkristallen kann durch Variation der Verfahrensparameter wie Verhältnis Salz zu Beschichtungssubstanz oder Verweilzeit im Mischer beeinflußt werden. Üblicherweise ist man bestrebt, die Schichtdicken möglichst gering zu halten, um keine nennenswerte Verschlechterung im Löse- und Reaktionsverhalten der Salzkristalle zu verursachen. Die erzielten Schichtdicken liegen bei etwa 50 µm bis 500 µm, bevorzugt 100 µm bis 200 µm, besonders bevorzugt 100 µm bis 150 µm.

Die Schichtdicken wurden rechnerisch anhand zuvor hergestellter Proben aus den hierbei benötigten Stoffmengen ermittelt.

Um ein konstant gutes und reproduzierbares Verhältnis zwischen Salz und Beschichtungssubstanz in dem Mischer zu gewährleisten, können beide Ströme in bekannter Weise regelungstechnisch verknüpft werden.

Die so erhaltenen beschichteten Natriumnitrat- und / oder Natriumnitritkristalle werden über eine Leitung einem Vorratsbehälter zugeführt. Vorteilhafterweise besitzt das so behandelte Salzkristallisat eine dauerhaft gute Rieselfähigkeit, so daß als Vorratsbehälter auch größere und somit wirtschaftlichere Behälter, wie Silos oder sogenannte Big bags eingesetzt werden können. Hieraus ergeben sich unmittelbar weitere Vorteile, so wird hierdurch beispielsweise eine wirtschaftliche Pufferung zwischen Produktion und Logistik ermöglicht. Außerdem kann die bereits beschriebene, aufwendige Vorzerkleinerung von verhärteten Salzkristallen entfallen. Dies erweist sich insbesondere bei späterer Verwendung der Salze in Prozessen, wo hohe Anforderungen an die Produktreinheit gestellt werden als vorteilhaft, da durch Wegfall dieser Verarbeitungsstufe mögliche Verunreinigungsquellen vermieden werden können.

Als Beschichtungssubstanz werden Kieselsäure und / oder Trikalziumphosphat eingesetzt. Die Beschichtung mit einer dieser Substanzen verhindert sowohl den direkten Kontakt der Kristalle untereinander als auch die Diffusion der Feuchtigkeit an die Kristalloberfläche. Weiterhin reagieren beide Beschichtungssubstanzen unter den üblichen Bedingungen nicht mit Natriumnitrat bzw. Natriumnitrit. Überraschenderweise genügen bei beiden Beschichtungssubstanzen bereits relativ geringe Mengen, um eine gute Rieselfähigkeit von Natriumnitrat bzw. Natriumnitrit, welche stark zur Agglomeratbildung neigen, zu gewährleisten. Je nach Anwendungsfall kann sich die Verwendung von Kieselsäure wie z.B. synthetische Kieselsäure oder von Trikalziumphosphat besonders empfehlen.

Da beide Beschichtungssubstanzen auch in der Lebensmittelindustrie zugelassen sind, ergeben sich hierdurch weitere Vorteile. So kann mit geringen Mengen an Kieselsäure beschichtetes Natriumnitrit aufgrund seiner guten Rieselfähigkeit verfahrenstechnisch einfach und wirtschaftlich bei der Herstellung von Pökelsalz eingesetzt werden. Pökelsalz besteht üblicherweise aus einer Mischung von Speisesalz und geringen Mengen an Natriumnitrit, der Anteil des Natriumnitrits liegt bei etwa 0,5 Gew.-%.

Das erfindungsgemäße Verfahren bietet die Möglichkeit, gut rieselfähiges Natriumnitrit und / oder Natriumnitrat in verfahrenstechnisch einfacher und wirtschaftlicher Art und Weise herzustellen. Die mit dem erfindungsgemäßen Verfahren hergestellten Produkte weisen eine längerfristig gute Rieselfähigkeit bei hoher Reinheit auf, sodaß sie auch hohen Anforderungen, wie sie beispielsweise in der Lebensmittelindustrie gestellt werden, genügen können.

### Beispiel

Zur Prüfung der Verarbeitungseigenschaften von mit feinteiliger Kieselsäure beschichtetem Natriumnitrit bei der Herstellung von Pökelsalz wurden ca. 1000 kg Natriumnitrit auf eine Restfeuchte von weniger als 0,2 Gew.-% Wasser getrocknet, anschließend auf eine Temperatur kleiner als etwa 30°C abgekühlt und im folgenden batchweise im Betonmischer mit feinteiligem SiO₂ beschichtet. Dazu wurden Chargen von jeweils 50 kg mit 100 g SiO₂ in einen 150-l-Betonmischer eingefüllt und bei 34 Upm ca. 10 Minuten gemischt. Der Mischer war zur Verbesserung der Durchmischung mit einer doppelten Schar ausgerüstet.

Die beschichtete Ware wurde aus dem Mischer direkt in die üblichen Gebinde abgesackt.

Trotz mehrwöchiger Lagerzeit ließ sich das mit feinteiliger Kieselsäure beschichtete Natriumnitrit vollkommen ohne den bisher erforderlichen Aufbereitungsaufwand direkt verarbeiten.

## Patentansprüche

1. Verfahren zur Herstellung von rieselfähigem Natriumnitrit und/oder Natriumnitrat, dadurch gekennzeichnet, daß man das Natriumnitrit und/oder Natriumnitrat nach Trocknung und Kühlung mit Kieselsäure und/oder Trikalziumphosphat beschichtet.

2. Verfahren nach Anspruch 1, dadurch gekennzeichnet, daß man das Natriumnitrit und/oder Natriumnitrat sowie Kieselsäure und/oder Trikalziumphosphat in einen Mischer aufgibt, wobei der Anteil von Kieselsäure und/oder Trikalziumphosphat 0,1 bis 1,0 Gew.-% beträgt.

3. Verwendung der gemäß Anspruch 1 erhältlichen Salze für die Herstellung von Pökelsalz.

4. Verwendung von Kieselsäure und/oder Trikalziumphosphat zur Beschichtung von für die Herstellung von Pökelsalz geeignetem Natriumnitrit und/oder Natriumnitrat.

## Claims

1. A process for preparing free-flowing sodium nitrite and/or sodium nitrate, which comprises, after drying and cooling, coating the sodium nitrite and/or sodium nitrate with silica and/or tricalcium phosphate.

2. A process as claimed in claim 1, wherein the sodium nitrite and/or sodium nitrate and silica and/or tricalcium phosphate are placed in a mixer, the proportion of silica and/or tricalcium phosphate being from 0.1 to 1.0% by weight.

3. Use of the salts obtainable as claimed in claim 1 for the production of curing salt.

4. Use of silica and/or tricalcium phosphate for coating sodium nitrite and/or sodium nitrate suitable for the production of curing salt.

## Revendications

1. Procédé pour préparer un nitrite de sodium et/ou un nitrate de sodium qui s'écoulent bien, caractérisé par le fait que l'on revêt le nitrite de sodium et/ou le nitrate de sodium, après séchage et refroidissement, par de la silice et/ou du phosphate tricalcique.

2. Procédé selon la revendication 1, caractérisé par le fait que l'on introduit le nitrite de sodium et/ou le nitrate de sodium, la silice et/ou le phosphate tricalcique dans un mélangeur, la proportion de silice et/ou de phosphate tricalcique étant de 0,1 à 1,0 % en poids.

3. Utilisation des sels obtenus selon la revendication 1 pour la préparation de sel pour salaisons.

4. Utilisation de la silice et/ou du phosphate tricalcique pour le revêtement d'un nitrite de sodium et/ou d'un nitrate de sodium approprié à la préparation d'un sel pour salaisons.
